# DEMANDE DE BREVET EUROPEEN

(11) **EP 4 443 413 A1**
(43) Date de publication de la demande: **09.10.2024**
(21) Numéro de dépôt: 24167007.4
(22) Date de dépôt: 27.03.2024
(51) Int. Cl.: G09C 5/00, H04L 9/32

(54) **PROCÉDÉ DE CODAGE DE SIGNATURE NUMÉRIQUE D'UN RÉSEAU DE NEURONES, DISPOSITIF ET PROGRAMME D ORDINATEUR CORRESPONDANT**

(30) Priorité: 29.03.2023 FR 2303043
(71) Demandeur: THALES, 92190 Meudon (FR)
(72) Inventeur: BELFY, Henri, 31036 TOULOUSE CEDEX 1 (FR); FOUGERE, Tom, 31036 TOULOUSE CEDEX 1 (FR)
(74) Mandataire: Lavoix

(57) **Abrégé**

L'invention se rapporte à un procédé de codage d'une signature numérique d'un réseau de neurones, procédé mis en oeuvre par un dispositif électronique, ledit réseau de neurones étant enregistré au sein d'une structure de données comprenant des blocs de paramètres. Un tel procédé comprend, pour un bloc de paramètres courant (BPc) comprenant au moins M paramètres représentant des nombres réels :
- une étape d'obtention (A10) d'une image binaire de signature (IBSig) à partir de la signature numérique comprenant un ensemble de bits extrait des paramètres du bloc de paramètres courant ;
- une étape de combinaison (A20) de l'image binaire de signature (IBSig) avec une image binaire de référence (IBR) délivrant une image binaire codée (IBC).

## Description

La présente invention se rapporte au domaine de la protection des réseaux de neurones. Plus particulièrement, l'invention se rapporte à la protection des données résultantes d'entrainement, appelées paramètres, qui sont utilisées pour l'inférence d'un réseau de neurones.

Les réseaux de neurones sont de plus en plus déployés et commercialisés dans une grande variété de scénarios du monde réel en raison des performances qu'ils atteignent, notamment dans des tâches de classification ou de prédictions. L'entraînement d'un réseau de neurones profond est un processus très coûteux qui nécessite (i) la disponibilité de quantités massives de données, souvent propriétaires, capturant différents scénarios au sein d'une application cible ; (ii) d'importantes ressources informatiques ; (iii) l'assistance d'experts en apprentissage profond pour ajuster soigneusement la topologie du réseau (par exemple, le type et le nombre de couches cachées), et définir correctement les hyper-paramètres d'entraînement, comme le taux d'apprentissage, la taille du lot, etc. Par conséquent, les réseaux de neurones performants nécessitent des investissements importants et doivent être protégés en conséquence. Ceci est particulièrement important quand le réseau de neurones est implémenté au sein d'équipements embarqués : ceux-ci peuvent être utilisés pour récupérer le réseau de neurones et l'utiliser dans d'autres contextes ou d'autres équipements.

Pour effectuer une protection des réseaux de neurones, on connait des techniques de tatouage numérique. Avec ces techniques, le réseau de neurones entrainé est marqué. Un processus de lecture est ensuite utilisé pour découvrir le ou les tatouages insérés au sein de la structure de données. On connait principalement deux types de techniques pour le tatouage des réseaux de neurones : les techniques dites en « boite noire » et les techniques dites en « boite blanche ».

Dans le cas du tatouage en boite blanche, le décodeur de tatouage extrait le ou les tatouages numériques à partir des paramètres du réseau de neurone. Il peut d'agir d'une extraction d'un message inséré au sein du réseau ou encore de la détection d'un tatouage.

Les techniques en boite noire consistent essentiellement en l'insertion d'un ou de plusieurs tatouages numériques, lesquels sont révélés lorsqu'une question spécifique est posée au réseau de neurones. Pendant tout le processus de décodage ou de détection, l'architecture et les paramètres internes du réseau de neurones sont totalement aveugles au décodeur ou au détecteur. En d'autres termes, les seuls éléments qui peuvent être contrôlées sont les entrées utilisées pour interroger le réseau et les sorties correspondant aux interrogations corrélatives aux requêtes.

Ces deux types de techniques peuvent être utilisées pour un même réseau de neurones. Il arrive cependant que les tatouages numériques soient effacés ou supprimés par les attaquants. Une telle situation se produit quand par exemple le réseau de neurones initialement piraté subit de trop nombreuses modifications (suppression de plusieurs couches, réentrainements, « prunning », quantisation). Dans une telle situation, les processus de tatouage (qui en règle générale tentent de perturber l'exécution du réseau le moins possible) peuvent se révéler insuffisants et incapables de permettre la conservation du tatouage. Il est donc nécessaire de proposer une technique qui permette de percevoir l'origine de toute ou partie d'un réseau de neurones, quand bien même celui-ci aurait subi d'importantes modifications après qu'il ait été dérobé.

Un objectif de l'invention est de proposer une technique de codage de signature numérique de réseau de neurones, en boite blanche, qui permet de résoudre les problématiques posées par les techniques antérieures, notamment la problématique de robustesse. Un autre objectif de l'invention est également de fournir une technique qui rende la comparaison entre un réseau original et un réseau dérobé plus facilement visualisable.

A cet effet, l'invention a pour objet un procédé de codage d'une signature numérique d'un réseau de neurones, procédé mis en oeuvre par un dispositif électronique, ledit réseau de neurones étant enregistré au sein d'une structure de données comprenant des blocs de paramètres. Un tel procédé comprend, pour un bloc de paramètres courant comprenant au moins M paramètres représentant des nombres réels :
- une étape d'obtention d'une image binaire de signature à partir de la signature numérique comprenant un ensemble de bits extrait des paramètres du bloc de paramètres courant ;
- une étape de combinaison de l'image binaire de signature avec une image binaire de référence délivrant une image binaire codée.

Ainsi, le procédé revendiqué permet d'identifier l'origine d'un réseau de neurones, par exemple lorsque celui-ci est utilisé dans des dispositifs non autorisés ou encore lors d'opérations d'analyse de cyberattaques.

Selon une caractéristique particulière, l'étape d'obtention de l'image binaire de signature à partir d'un ensemble de bits des paramètres du bloc de paramètres courant comprend :
- une étape de détermination, à partir d'un premier facteur prédéterminé d'un ensemble de N paramètres à traiter, N étant inférieur ou égal à M ;
- une étape d'obtention, à partir d'au moins un deuxième facteur prédéterminé d'un ensemble de K bits à traiter, pour chacun des paramètres dudit ensemble de N paramètres à traiter, délivrant un ensemble de P bits ;
- une étape de création, à partir des P bits de l'ensemble de bits, de l'image binaire de signature ;

Selon une caractéristique particulière, caractérisé en ce que l'étape de combinaison de l'image binaire de signature avec l'image binaire de référence comprend, pour chaque bit de l'image binaire de référence, le calcul d'un bit combiné à l'aide d'un bit correspondant de l'image binaire de signature.

Selon une caractéristique particulière, le calcul du bit combiné consistant de préférence en une opération de « ou exclusif ».

Selon une caractéristique particulière, le procédé est itérativement mis en oeuvre sur une pluralité de blocs de paramètres du réseau de neurones, délivrant une pluralité d'images binaires caractéristique, chacune associée à un bloc de paramètres.

Selon un autre aspect, la divulgation se rapporte à un procédé de décodage d'une signature numérique d'un réseau de neurones, procédé mis en oeuvre par un dispositif électronique, ledit réseau de neurones étant enregistré au sein d'une structure de données comprenant des blocs de paramètres. Un tel procédé comprend, pour un bloc de paramètres courant comprenant au moins M paramètres représentant des nombres réels :
- une étape d'obtention d'une image binaire de signature à partir d'une signature comprenant un ensemble de bits extrait des paramètres du bloc de paramètres courant;
- une étape de combinaison, de l'image binaire de signature avec une image binaire codée associée au bloc de paramètres courant, délivrant une image binaire de référence induite.

Selon une caractéristique particulière, l'étape d'obtention de l'image binaire de signature comprend les étapes suivantes :
- obtention d'un premier facteur prédéterminé relatif à la détermination de N paramètres à sélectionner, d'au moins un deuxième facteur prédéterminé relatif à l'obtention des K bits à traiter et d'une image binaire codée du bloc de paramètres courant;
- obtention, à partir dudit au moins un facteur prédéterminé d'un ensemble de K bits à traiter, pour chacun des paramètres dudit ensemble de N paramètres à traiter, délivrant un ensemble de P bits ;
- création, à partir des P bits de l'ensemble de bits, d'une image binaire de signature ;

Selon une caractéristique particulière, le procédé comprend en outre une étape de comparaison de l'image binaire de référence induite avec une image binaire de référence.

Dès lors, il est visuellement aisé, pour un observateur, de déterminer si un bloc de réseau de neurones a fait l'objet de modifications non autorisée ou d'une appropriation non autorisé.

Selon un autre aspect, la divulgation se rapporte également à un dispositif électronique de codage d'une signature numérique d'un réseau de neurones, ledit réseau de neurones étant enregistré au sein d'une structure de données comprenant des blocs de paramètres. Un tel dispositif comprend, pour un bloc de paramètres courant comprenant au moins M paramètres représentant des nombres réels :
- des moyens d'obtention d'une image binaire de signature à partir de la signature numérique comprenant un ensemble de bits extrait des paramètres du bloc de paramètres courant ;
- des moyens de combinaison de l'image binaire de signature avec une image binaire de référence délivrant une délivrant une image binaire codée.

Selon un autre aspect, la divulgation se rapporte également à un dispositif électronique de décodage d'une signature numérique d'un réseau de neurones, ledit réseau de neurones étant enregistré au sein d'une structure de données comprenant des blocs de paramètres. Un tel dispositif comprend, pour un bloc de paramètres courant comprenant au moins M paramètres représentant des nombres réels :
- des moyens d'obtention d'une image binaire de signature à partir d'un ensemble de bits des paramètres du bloc de paramètres courant ;
- des moyens de combinaison, de l'image binaire de signature avec une image binaire codée associée au bloc de paramètres courant, délivrant une image binaire de référence induite.

Selon une implémentation préférée, les différentes étapes des procédés exposés sont mises en oeuvre par un ou plusieurs logiciels ou programmes d'ordinateur, comprenant des instructions logicielles destinées à être exécutées par un processeur de données d'un module relais selon la divulgation et étant conçu pour commander l'exécution des différentes étapes des procédés. En conséquence, la divulgation vise aussi un programme, susceptible d'être exécuté par un ordinateur ou par un processeur de données, ce programme comportant des instructions pour commander l'exécution des étapes des procédés tel que mentionné dans la présente, lorsqu'ils sont exécutés par un terminal et/ou par un circuit intégré. Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable. La divulgation vise aussi un support d'informations lisible par un processeur de données, et comportant des instructions d'un programme tel que mentionné ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur, une mémoire flash ou une mémoire d'un de stockage d'un autre type. D'autre part, le support d'informations peut être un support transmissible tel qu'un signal électrique ou optique, qui peut être acheminé via un câble électrique ou optique, par radio ou par d'autres moyens. Le programme selon la divulgation peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question. Selon un mode de réalisation, la divulgation est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.). De la même manière, un composant matériel correspond à tout élément d'un ensemble matériel (ou « hardware ») apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (« firmware »), etc. Chaque composante de l'ensemble précédemment décrit met bien entendu en oeuvre ses propres modules logiciels. Les différents exemples de réalisation et caractéristiques mentionnés sont combinables entre eux pour la mise en oeuvre de la divulgation.

D'autres caractéristiques et avantages de l'invention ressortiront de la description qui en est donnée ci-dessous, à titre indicatif et nullement limitatif, en référence aux figures annexées, parmi lesquelles :
- [Fig. 1] illustre un dispositif de codage de signature numérique mettant en oeuvre l'invention selon un exemple de réalisation ;
- [Fig. 2] illustre un procédé de codage de signature numérique d'un réseau de neurones ;
- [Fig. 3] illustre un exemple de mise en oeuvre du procédé de codage de signature numérique d'un réseau de neurones ;
- [Fig. 4] illustre un procédé de codage de signature numérique d'un réseau de neurones ;
- [Fig. 5] illustre un exemple de mise en oeuvre du procédé de décodage de signature numérique d'un réseau de neurones.

### Rappels du principe

Comme explicité précédemment, un objet de l'invention est de disposer d'une technique de codage de signature numérique d'un réseau de neurones, technique mise en oeuvre en boite blanche, qui offre une résistance accrue aux attaques que peut subir un réseau de neurones, particulièrement dans un contexte de mise en oeuvre embarquée. Un autre objet de la présente est ainsi de permettre d'identifier plus efficacement un réseau de neurones qui a été extrait d'un dispositif embarqué, puis modifié et réinséré dans un autre dispositif embarqué, par un attaquant qui souhaite détourner l'usage d'un réseau de neurones ne lui appartenant pas, modifier un réseau de neurones pour fausser les résultats de celui-ci (par exemple pour effectuer une cyberattaque) ou encore réaliser des économies en s'appropriant le travail de recherche et de développement effectué par un concurrent.

Le principe général de l'invention consiste en l'extraction, à partir d'au moins un bloc de paramètres du réseau de neurones (préalablement entrainé), d'une signature (prenant la forme d'une image), à partir de bits sélectionnés des paramètres (valeurs numériques) enregistrés dans les blocs de paramètres. L'invention se rapporte ainsi à un procédé de codage de signature numérique d'un réseau de neurones (préalablement entrainé) comprenant un ensemble de blocs de paramètres, les blocs de paramètres comprenant des paramètres du réseau de neurones. Ces paramètres sont par exemple des paramètres qui ont fait l'objet de l'apprentissage, comme les poids des couches, les biais, les valeurs de tenseurs, les valeurs de normalisation, les valeurs de convolution, etc. Ainsi, au moins certains des blocs de paramètres comprennent chacun un ensemble de paramètres, dont le nombre est variable en fonction du bloc en question. Dans un exemple de réalisation, les blocs de paramètres comprennent des valeurs réelles flottantes (float) d'un nombre de bits prédéterminé (par exemple 16, 32 ou 64 bits). En d'autres termes, chacune de ces valeurs réelles flottantes est par exemple stockée sur deux, quatre ou huit octets (au sein d'un bloc donné, toutes les valeurs sont codées sur le même nombre de bits ou d'octets). Le procédé de codage de signature numérique de l'invention est exécuté sur ces blocs de paramètres pour extraire, à partir de ceux-ci, une signature secrète. Le procédé est par exemple mis en oeuvre sur un réseau de neurones enregistré au format onnx, lequel présente l'avantage de disposer de nombreuses API d'accès et de modifications, quels que soient les langages de programmation utilisés.

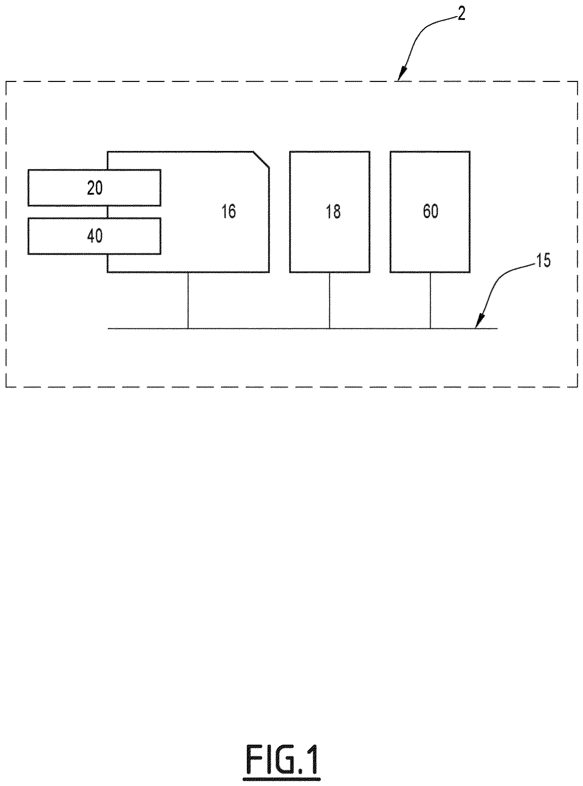

La figure 1 illustre schématiquement un dispositif électronique de codage de signature numérique. Le dispositif électronique de codage de signature numérique 2 comprend un module d'obtention (20) de bits à traiter (Sbts) ; un module de traitement (40) des bits à traiter (Sbts) en fonction d'au moins une donnée secrète (qui sont également appelés facteurs) comme représenté sur la figure 1.

Dans l'exemple de la figure 1, le dispositif de codage de signature numérique 2 comprend une unité de mémoire électronique 16, au moins un processeur de calcul 18 et une interface 60 de communication avec des dispositifs distants, par un protocole de communication choisi, par exemple un protocole filaire et/ou un protocole de communication radio. Les éléments du dispositif 2 sont adaptés à communiquer via un bus de communication 15.

Dans l'exemple de la figure 1, le module d'obtention (20) de bits à traiter (Sbts), le module de traitement (40) des bits à traiter (Sbts) en fonction d'au moins une donnée secrète sont réalisés chacun sous forme d'un logiciel, ou d'une brique logicielle, exécutable par le processeur. La mémoire du dispositif électronique de codage de signature numérique 2 est alors apte à stocker un logiciel d'obtention (20) de bits à traiter (Sbts) et un logiciel de traitement (40) des bits à traiter (Sbts) en fonction d'au moins une donnée secrète. Le processeur est alors apte à exécuter chacun des logiciels parmi le logiciel d'obtention d'un message à tatouer (Msg) et le logiciel de modification de paramètres à partir des blocs de paramètres constituant le réseau de neurones.

En variante non représentée, module d'obtention (20) de bits à traiter (Sbts), le module de traitement (40) des bits à traiter (Sbts) en fonction d'au moins une donnée secrète, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Spécifie Integrated Circuit*).

Lorsque le dispositif électronique de codage de signature numérique 2 est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

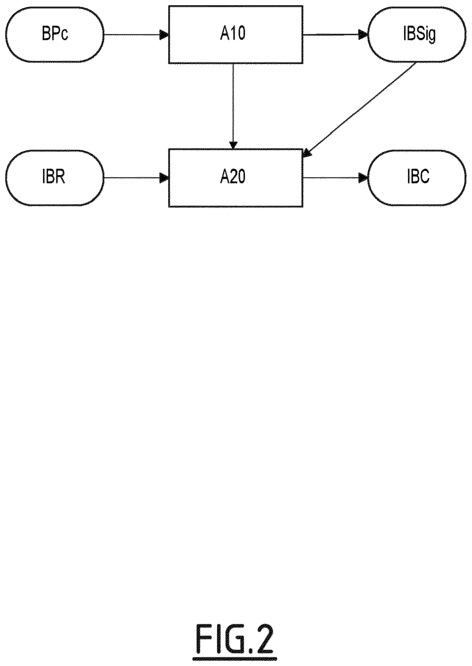

En relation avec la figure 2, le procédé de codage d'une signature numérique d'un réseau de neurones est mis en oeuvre par un dispositif électronique tel que présenté précédemment. Le réseau de neurones est enregistré au sein d'une structure de données comprenant des blocs de paramètres. Le procédé comprend, pour un bloc de paramètres courant comprenant au moins M paramètres représentant des nombres réels :
- une étape d'obtention (A10) d'une image binaire de signature (IBSig) à partir d'une signature comprenant un ensemble de bits extrait des paramètres du bloc de paramètres courant ;
- Une étape de combinaison (A20) de l'image binaire de signature (IBSig) avec une image binaire de référence (IBR) délivrant l'image binaire codée (IBC).

Lorsque le nombre de paramètres enregistrés dans le bloc est grand par rapport à l'image binaire de référence, on effectue une sélection d'un nombre plus restreint de paramètres au sein du bloc, à l'aide d'un premier facteur prédéterminé. Pour les besoins de la présente on rappelle qu'une image binaire (qu'elle soit de référence, caractéristique, de signature, etc.) est une image matricielle bichrome (par exemple noire et blanche). Elle est par exemple codée sous une forme binaire (en base 2), soit codée sous une forme plus complexe avec au moins deux couleurs possibles (noir et blanc ou encore en RVB en effectuant une combinaison de plusieurs signatures ou de portions d'une seule signature). D'une manière générale, une seule signature est extraite pour un bloc de paramètres courant. Lorsque le bloc comprend de nombreux paramètres, il est également envisageable de construire plus d'une signature pour ce bloc. Dans ce cas, pour un bloc donnée, l'étape d'extraction et de codage de la signature est répété pour produire autant de signatures complètes que nécessaire. On obtient ainsi une redondance de signatures codées pour un bloc de réseau de neurones donné, comme cela est explicité en détail par la suite.

La signature extraite à partir des bits des paramètres (valeurs réelles) d'un bloc peut être traitée pour prendre plusieurs formes. Dans un premier exemple, la signature peut être traitée pour prendre la forme d'une chaine de caractères chiffrée (ou de la répétition d'une chaine de caractères chiffrée). Dans un deuxième exemple, la signature peut être traitée pour prendre la forme d'une image. Dans un troisième exemple, la signature peut être traitée pour prendre la forme d'une image transformée (par exemple bruitée).

Dans le cas du premier exemple, la chaine de caractères peut être construite de la manière suivante : une chaine de caractères de référence est déterminée (par exemple une chaine définissant un copyright, de type « TheCompany1^{©} ». Cette chaine peut avoir une longueur déterminée (par exemple six, douze, dix-huit, vingt-quatre caractères). A partir de cette chaine de caractère de référence, un code de détection d'erreur est calculé (CRC, de l'anglais pour « *cyclic redundancy check »).* Ce code de détection d'erreurs est concaténé avec la chaine de caractère de référence pour former un mot de code (« codeword » en anglais). Ce mot de code dispose également d'une taille prédéterminée. Bien que non obligatoire, le mot de code peut ensuite être encodé, par exemple avec une transformation pseudo-aléatoire réversible et le mot de code encodé peut constituer la signature de base avec laquelle la signature extraite à partir des blocs de paramètres du réseau de neurones est combinée. Le mot de code encodé est également de taille prédéterminée (par exemple soixante-quatre, cent vingt-huit ou deux cent cinquante-six bits). La taille du mot de code est choisie, initialement, en fonction des circonstances et notamment en fonction de la taille des blocs (par exemple en fonction du nombre de paramètre contenus dans les blocs de paramètres), de sorte notamment à permettre l'extraction complète d'au moins une occurrence de la signature dans les blocs de valeurs réelles, et obtenir ainsi au moins une signature complète dans un bloc.

Dans le cas du deuxième exemple, l'image à extraire en tant que message peut être sélectionnée de sorte à reproduire visuellement un marquage d'appartenance à une entité (par exemple l'image peut être un logo d'une entreprise). L'image est sélectionnée pour que sa taille en bits soit compatible avec au moins certains des blocs de paramètres (i.e. qu'elle soit combinable à partir des bits extraits d'un bloc de paramètres). Comme dans le cas de la chaine de caractères, il est également possible de calculer un code correcteur d'erreur et/ou de transformer l'image ou le mot de code encodé comme dans le premier exemple.

### Exemple de réalisation pour le codage de signatures d'un bloc du réseau de neurones de référence

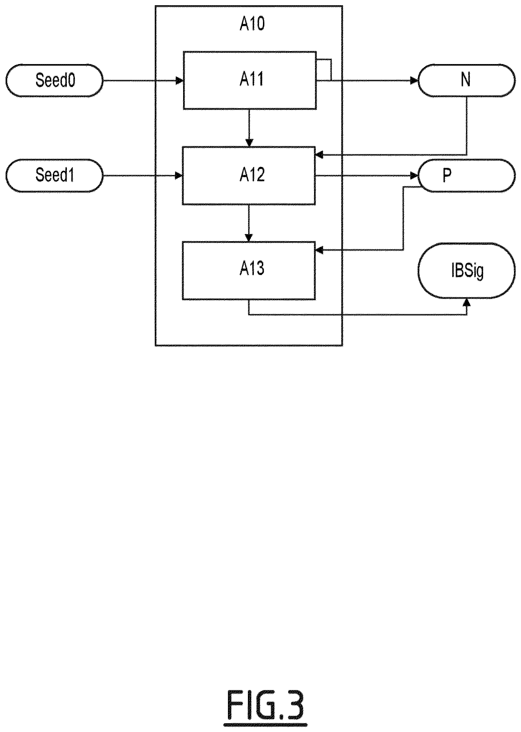

On présente, en relation avec les figures 2 et 3, dans un exemple de réalisation, la manière dont la signature est extraite à partir d'un bloc de paramètres courant du réseau de neurones, comprenant M paramètres différents, enregistrés sous la forme de nombre réels.

Cette méthode comprend :
- Une étape de détermination A11, à partir d'un premier facteur prédéterminé (seed0) d'un ensemble de N paramètres à traiter, N étant inférieur ou égal à M ;
- Une étape d'obtention A12, à partir d'au moins un deuxième facteur prédéterminé (seed1), d'un ensemble de K bits à traiter, pour chacun des paramètres dudit ensemble de N paramètres à traiter, délivrant un ensemble de P bits ;
- Une étape de création A13, à partir des P bits de l'ensemble de bits, d'une image binaire de signature (IBSig) ;
- Une étape de combinaison A20, de l'image binaire de signature (IBSig) avec une image binaire de référence (IBR), délivrant l'image binaire codée (IBC) ;

Le nombre de bit K extraits, par paramètre, peut être identique pour tous les paramètres d'un bloc courant ou être différent pour chaque paramètre du bloc courant. Ceci est déterminé en fonction des besoins et/ou d'un paramétrage initial (par exemple un facteur « seed1 » différent pour chaque paramètre). En d'autres termes, et de manière plus concise, la méthode proposée consiste à combiner des bits sélectionnés (par exemple dans une colonne ou plusieurs colonnes de tout ou partie des paramètres du bloc de paramètres courant), avec une image de référence, appartenant au propriétaire du réseau de neurones. Cette combinaison délivre une image binaire codée qui est enregistrée dans une base de données, avec des informations relatives au bloc de paramètres courant. Cette image binaire codée ne reproduit pas nécessairement un élément visuel. Elle s'affiche plutôt comme un bruit global indistinct.

La procédure précédemment décrite est appliquée sur toute ou partie des blocs du réseau de neurones pour lesquels une telle opération est intéressante. Par exemple, les blocs dans lesquels les valeurs des paramètres sont répétés (par exemple ceux qui comprennent majoritairement des valeurs uns ou zéros) ne sont pas pris en compte pour la création des images binaires caractéristiques. A l'issue du traitement d'un réseau de neurones par le procédé de l'invention, on dispose donc d'un ensemble d'images binaires caractéristiques, enregistrées en base de données, chacune étant associée à un bloc particulier (et à un réseau de neurones d'où proviennent ces blocs).

Dans un exemple, les bits sélectionnés dans les blocs sont majoritairement des bits de poids fort des paramètres. Ainsi on profite du fait que ces bits présentent une probabilité de modification moindre que les bits de poids faible (notamment lors d'un réapprentissage).

Les facteurs prédéterminés (« seed0 » et « seed1 ») sont utilisés pour sélectionner les paramètres et les bits de ces paramètres à utiliser. En fonction des conditions de mise en oeuvre opérationnelles, ces facteurs peuvent être communs à tous les blocs du réseau de neurones ou être individualisés, par bloc. Par exemple, la taille des blocs pouvant varier au sien d'un même réseau de neurones, ces facteurs peuvent également varier. Auquel cas, ils sont sauvegardés, au sein de la base de données avec l'image binaire codée.

Ainsi, le codage de signature numérique du bloc de paramètres est invisible. En effet, dans la mesure où la création de l'image binaire codée ne modifie pas le contenu du réseau de neurones, il est impossible, pour un attaquant de modifier cette image caractéristique.

Selon la présente l'étape de combinaison de l'image binaire de signature (ISig) avec l'image binaire de référence (IBR) comprend une opération de ou exclusif (xor) entre les bits correspondants de chaque image. En d'autres termes, le bit de coordonnées (0,0) de l'image binaire de signature (ISig) est combiné avec le bit de coordonnées (0,0) l'image binaire de référence (IBR) ; le bit de coordonnées (0,1) de l'image binaire de signature (ISig) est combiné avec le bit de coordonnées (0,1) l'image binaire de référence (IBR) ; etc. Les images sont de tailles identique et chaque bit de l'image binaire de signature (ISig) peut être combiné avec un bit correspondant de l'image binaire de référence (IBR).

Cette opération de « ou exclusif » réalisée sur l'image binaire de référence (IBR) avec l'image binaire de signature (ISig) permet, au sein du codage, de la bruiter, de manière aléatoire à l'aide du masque constitué de l'image binaire de signature. Cette opération peut être effectuée en utilisant d'autres moyens ou d'autres opérations convenables. L'objet de celle-ci est, comme cela a été indiqué, de pouvoir retrouver tout ou partie de l'image binaire de référence, même pour des blocs qui ont subi des transformations, et ce de manière visuelle. Ainsi, la méthode mise en oeuvre est rapide, peu gourmande en ressources et permet de disposer de données de signatures qui sont résistantes aux modifications effectuées sur le réseau de neurones.

### Exemple de décodage des signatures extraites avec un réseau de neurones modifié

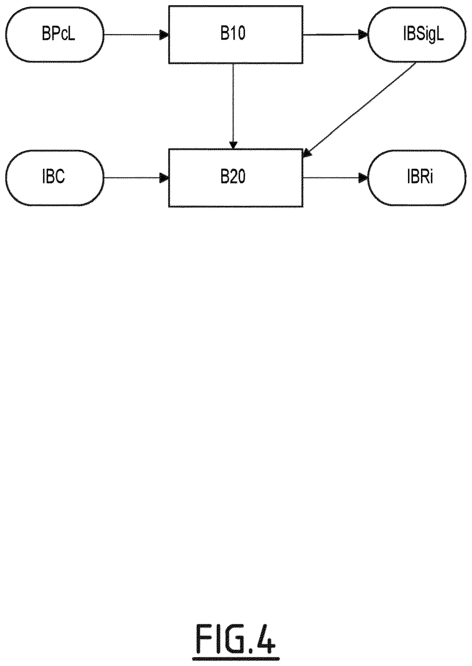

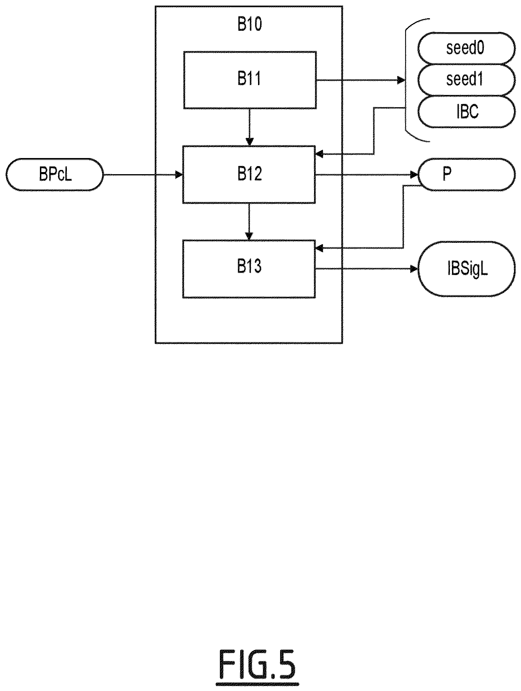

Un exemple de mise en oeuvre de la méthode de décodage des signatures extraites avec un réseau de neurones modifié est décrite en relation avec les figures 4 et 5. Le décodage consiste à réaliser une corrélation des bits extraits d'un bloc de réseau de neurones à tester. Ainsi, pour un bloc de paramètres courant d'un réseau de neurones, dont on suspecte qu'il appartient à un titulaire de droit, les étapes suivantes sont mises en oeuvre :
- obtention B11 du premier facteur prédéterminé (seed0) relatif à la détermination des N paramètres à sélectionner, dudit au moins un deuxième facteur prédéterminé (seed1) relatif à l'obtention des K bits à traiter et de l'image binaire codée (IBC) du bloc de paramètres courant (ces éléments sont par exemple stockés dans une base de données) ;
- obtention B12, à partir dudit au moins un deuxième facteur prédéterminé (seed1) d'un ensemble de K bits à traiter, pour chacun des paramètres dudit ensemble de N paramètres à traiter, délivrant un ensemble de P bits ;
- création B13 à partir des P bits de l'ensemble de bits, d'une image binaire de signature (IBSigL) ; cette image représente la signature extraite du bloc litigieux ;
- combinaison B20, de l'image binaire de signature (IBSigL) avec l'image binaire codée (IBC), délivrant une image binaire de référence induite (IBRi).

En fonction des modifications subies par le bloc d'origine du réseau de neurones, l'image binaire de référence induite correspond, à une échelle variée, à l'image binaire de référence (IBR) utilisée lors de la création de la signature. L'avantage, cependant, de ce décodage, est qu'il permet immédiatement de constater l'étendue des modifications effectuées sur le bloc de paramètres, de par l'aspect de l'image binaire de référence induite (IBRi).

Soit (b^{r}ᵢ) un bit de l'image binaire de référence (IBR) et (b^{s}ᵢ) le bit correspondant de l'image binaire de signature.
- Le codage consiste à calculer le bit (b^{c}ᵢ) de l'image binaire codée (IBC) par : b^{c}ᵢ = b^{r}ᵢ ⊕ b^{s}ᵢ. b^{c}ᵢ est le bit codé de b^{r}ᵢ, comme cela a été exposé précédemment ;
   Pour décoder b^{c}ᵢ on utilise à nouveau le bit b^{s1}ᵢ de l'image binaire de signature
   (IBSigL) extraite du bloc litigieux et on calcule : b^{r1}ᵢ = b^{c}ᵢ ⊕ b^{s1}ᵢ ;
- Si le bit b^{s1}ᵢ (du bloc litigieux) est identique au bit b^{s}ᵢ (du bloc d'origine), le résultat b^{r1}ᵢ de cette opération de décodage donne b^{r}ᵢ, le bit de l'image binaire de référence (IBR) et l'image binaire de référence n'est pas modifiée pour ce bit ;
- Si le bit b^{s1}ᵢ (du bloc litigieux) est différent au bit b^{s}ᵢ (du bloc d'origine), le résultat b^{r1}ᵢ de cette opération de décodage donne l'inverse du bit b^{r}ᵢ, le bit de l'image binaire de référence (IBR) et l'image binaire de référence est modifiée pour ce bit.

Ainsi, l'opération de décodage permet, pour un ensemble de bits correspondants à ceux de la signature du bloc d'origine, récupérer une image binaire de référence induite (IBRi) qui présente plus ou moins de similarité avec l'image binaire codée (IBC) sauvegardée pour ce bloc. L'image binaire de référence induite (IBRi) peut être directement affichée pour constater l'étendue des modifications effectuée sur ce bloc du réseau de neurones.

Dans un exemple, chaque bloc du réseau de neurones litigieux est utilisé pour extraire une image binaire de signature pour ce bloc. Soit un réseau de neurones litigieux comprenant O blocs. On extrait donc Q images binaires de signature (IBSigL₀, ..., IBSigL_{Q-1}). Selon l'invention, une corrélation est effectuée entre chaque image binaire de signature (IBSigL₀, ..., IBSigL_{Q-1}) du réseau litigieux et chaque l'image binaire codée (IBC₀, ..., IBC_{M-1}) du réseau original (qui comprend M blocs dont on a codé une image binaire codée). De cette façon, même si le réseau litigieux a subi des transformations consistant par exemple à inverser des blocs, à réaliser un nouvel apprentissage sur certains blocs, ou à réduire la taille de certains blocs, la corrélation globale du réseau permet tout de même d'obtenir une représentation visuelle des similitudes entre ces deux réseaux.

Une correction d'erreur basée sur l'ensemble des blocs, par exemple par majorité, par combinaison ou par seuil automatique peut également être effectuée sur l'ensemble des blocs concernés, afin de récupérer une version plus lisible de l'image. Il est ainsi possible de constater la présence de l'image binaire de référence (IBR) pour plusieurs blocs, même en cas de modifications des paramètres du réseau de neurones.

### Sélection de facteurs optimaux de sélection de bits

Dans un exemple de réalisation complémentaire, le procédé de codage de signature numérique décrit précédemment peut être mis en oeuvre de manière optimisée en sélectionnant, dans les blocs de paramètres, le ou les index de bits qui résistent le mieux aux diverses modifications que peut subir le réseau de neurones. Plus particulièrement, dans cet exemple de réalisation, le réseau de neurones original (i.e. avant mise en oeuvre du codage de signature numérique), constitue la référence. Le procédé de l'invention est mis en oeuvre itérativement sur des versions dégradées du réseau de neurones pour rechercher et identifier une signature originale. En d'autres termes, on fait subir, au réseau de neurones de référence, plusieurs modifications (suppressions de couches, « pruning », réapprentissage, etc.). On obtient plusieurs versions dégradées du réseau de neurones de référence (ces versions étant supposées être proches de celles qu'un attaquant pourrait faire subir au réseau de neurone de référence). Une fois ces matériels de base à disposition, on met en oeuvre au moins une itération de la procédure suivante :
- Extraction de signatures à partir du réseau de neurones de référence, selon le procédé de traitement précédemment présenté, à l'aide de facteurs d'extraction courants ; ces signatures extraites sont enregistrées en base de données ;
- Pour chaque version dégradée du réseau de neurones de référence, mise en oeuvre de la corrélation de signature, telle que précédemment décrite. Les résultats de corrélation sont enregistrés pour chaque version dégradée du réseau de neurones de référence ;
- Modification des facteurs d'extraction courants, consistant par exemple en une modification des paramètres qui sont sélectionnés dans les blocs (modification de seed0 par exemple), modification des index des bits sélectionnés dans les paramètres (modification de seedt par exemple).

Une fois l'ensemble des résultats de corrélation obtenus, les facteurs d'extraction qui résistent le mieux aux modifications apportées au réseau de neurones de référence sont conservés et constituent ceux qui sont utilisés en conditions opérationnelles.

### Marquage additionnel de champs documentaires

Selon une caractéristique additionnelle, le réseau de neurones de référence peut également subir un tatouage comprenant une étape de marquage de champs documentaire. En fonction du format utilisé pour sauvegarder le réseau de neurones issu de l'entrainement, des champs documentaires sont en effet présents. Par exemple, le format onnx, contient des champs documentaires qui peuvent faire l'objet d'un marquage. Les champs suivant peuvent par exemple être modifiés avec une chaine de caractère secrète :
model.producer_name
model.producer_version
model.doc_string
model.graph.doc_string

Cette chaine de caractère secrète peut se présenter sous la forme d'un mot de code chiffré. L'avantage de ce marquage complémentaire est qu'il ne nécessite pas de modifier les valeurs inscrites dans le réseau de neurones. Il est donc sans impact sur les performances du réseau de neurones. Ce marquage peut comprendre un nombre prédéterminé de caractères, à partir duquel on calcule un code correcteur d'erreurs, le mot de code résultant étant chiffré et encodé en base64 par exemple.

### Caractéristiques complémentaires relatives au réseau de neurones

Le réseau de neurones comporte une succession ordonnée de couches de neurones dont chacune prend ses entrées sur les sorties de la couche précédente.

Plus précisément, chaque couche comprend des neurones prenant leurs entrées sur les sorties des neurones de la couche précédente, ou bien sur les variables d'entrée pour la première couche.

En variante, des structures de réseaux de neurones plus complexes peuvent être envisagées avec une couche qui peut être reliée à une couche plus lointaine que la couche immédiatement précédente.

À chaque neurone est également associée une opération, c'est-à-dire un type de traitement, à effectuer par ledit neurone au sein de la couche de traitement correspondante.

Chaque couche est reliée aux autres couches par une pluralité de synapses. Un poids synaptique est associé à chaque synapse, et chaque synapse forme une liaison entre deux neurones. C'est souvent un nombre réel, qui prend des valeurs positives comme négatives. Dans certains cas, le poids synaptique est un nombre complexe.

Chaque neurone est propre à effectuer une somme pondérée des valeur(s) reçue(s) de la part des neurones de la couche précédente, chaque valeur étant alors multipliée par le poids synaptique respectif de chaque synapse, ou liaison, entre ledit neurone et les neurones de la couche précédente, puis à appliquer une fonction d'activation, typiquement une fonction non-linéaire, à ladite somme pondérée, et à délivrer en sortie dudit neurone, en particulier aux neurones de la couche suivante qui lui sont connectés, la valeur résultant de l'application de la fonction d'activation. La fonction d'activation permet d'introduire une non-linéarité dans le traitement effectué par chaque neurone. La fonction sigmoïde, la fonction tangente hyperbolique, la fonction de Heaviside sont des exemples de fonction d'activation.

En complément facultatif, chaque neurone est également apte à appliquer, en outre, un facteur multiplicatif, également appelé biais, à la sortie de la fonction d'activation, et la valeur délivrée en sortie dudit neurone est alors le produit de la valeur de biais et de la valeur issue de la fonction d'activation.

Un réseau de neurones à convolution est aussi parfois dénommé réseau de neurones convolutif ou par le sigle CNN qui renvoie à la dénomination anglaise de « Convolutional Neural Networks ».

Dans un réseau de neurones à convolution, chaque neurone d'une même couche présente exactement le même schéma de connexion que ses neurones voisins, mais à différentes positions d'entrée. Le motif de connexion est appelé noyau de convolution ou, plus souvent, « kernel » en référence à la dénomination anglaise correspondante.

Une couche de neurones entièrement connectée est une couche dans laquelle les neurones de ladite couche sont chacun connectés à tous les neurones de la couche précédente.

Un tel type de couche est plus souvent dénommé selon le terme anglais de « fully connected », et parfois désigné sous la dénomination « couche dense ».

Ces types de réseau de neurones sont encodés dans des formats génériques comme par exemple onnx. La présente divulgation s'applique à tout type de topologie de réseau de neurones courant supporté par ce format générique, par exemple « fully connected », CNN, mais également RNN, « Attention layer », ... qui est représentable par un ou plusieurs blocs de paramètres comprenant des valeurs tel qu'exposé précédemment.

## Revendications

1. Procédé de codage d'une signature numérique d'un réseau de neurones, procédé mis en oeuvre par un dispositif électronique, ledit réseau de neurones étant enregistré au sein d'une structure de données comprenant des blocs de paramètres, le procédé comprenant, pour un bloc de paramètres courant (BPc) comprenant au moins M paramètres représentant des nombres réels, les paramètres étant choisis parmi le groupe consistant en : des poids de couches, des biais, des valeurs de tenseurs, des valeurs de normalisation et des valeurs de convolution :
- une étape d'obtention (A10) d'une image binaire de signature (IBSig) à partir de la signature numérique comprenant un ensemble de bits extrait des paramètres du bloc de paramètres courant ;
- une étape de combinaison (A20) de l'image binaire de signature (IBSig) avec une image binaire de référence (IBR) délivrant une image binaire codée (IBC).

2. Procédé de codage selon la revendication 1, **caractérisé en ce que** l'étape d'obtention (10) de l'image binaire de signature (IBSig) à partir d'un ensemble de bits des paramètres du bloc de paramètres courant comprend :
- une étape de détermination (A11), à partir d'un premier facteur prédéterminé (seed0) d'un ensemble de N paramètres à traiter, N étant inférieur ou égal à M ;
- une étape d'obtention (A12), à partir d'au moins un deuxième facteur prédéterminé (seed1) d'un ensemble de K bits à traiter, pour chacun des paramètres dudit ensemble de N paramètres à traiter, délivrant un ensemble de P bits ;
- une étape de création (A13), à partir des P bits de l'ensemble de bits, de l'image binaire de signature (IBSig) ;

3. Procédé de codage selon la revendication 1, **caractérisé en ce que** l'étape de combinaison (A20) de l'image binaire de signature (IBSig) avec l'image binaire de référence (IBR) comprend, pour chaque bit de l'image binaire de référence (IBR), le calcul d'un bit combiné à l'aide d'un bit correspondant de l'image binaire de signature (IBSig) ;
le calcul du bit combiné consistant de préférence en une opération de « ou exclusif ».

4. Procédé de codage selon la revendication 1, **caractérisé en ce qu'**il est itérativement mis en oeuvre sur une pluralité de blocs (B₀, ... B_{R-1}) de paramètres du réseau de neurones, délivrant une pluralité d'images binaires caractéristique (IBC₀, ... IBC_{R-1}), chacune associée à un bloc de paramètres.

5. Procédé de décodage d'une signature numérique d'un réseau de neurones, procédé mis en oeuvre par un dispositif électronique, ledit réseau de neurones étant enregistré au sein d'une structure de données comprenant des blocs de paramètres, le procédé comprenant, pour un bloc de paramètres courant (BPcL) comprenant au moins M paramètres représentant des nombres réels, les paramètres étant choisis parmi le groupe consistant en : des poids de couches, des biais, des valeurs de tenseurs, des valeurs de normalisation et des valeurs de convolution :
- une étape d'obtention (B10) d'une image binaire de signature (IBSigL) à partir d'une signature comprenant un ensemble de bits extrait des paramètres du bloc de paramètres courant ;
- une étape de combinaison (B20), de l'image binaire de signature (IBSigL) avec une image binaire codée (IBC) associée au bloc de paramètres courant, délivrant une image binaire de référence induite (IBRi).

6. Procédé de décodage selon la revendication 5, **caractérisé en ce que** l'étape d'obtention (B10) de l'image binaire de signature (IBSigL) comprend les étapes suivantes :
- obtention (B11) d'un premier facteur prédéterminé (seed0) relatif à la détermination de N paramètres à sélectionner, d'au moins un deuxième facteur prédéterminé (seed1) relatif à l'obtention des K bits à traiter et d'une image binaire codée (IBC) du bloc de paramètres courant ;
- obtention (B12), à partir dudit au moins un facteur prédéterminé (seed1) d'un ensemble de K bits à traiter, pour chacun des paramètres dudit ensemble de N paramètres à traiter, délivrant un ensemble de P bits ;
- création (B13), à partir des P bits de l'ensemble de bits, d'une image binaire de signature (IBSigL) ;

7. Procédé de décodage selon la revendication 5, **caractérisé en ce qu'**il comprend une étape de comparaison de l'image binaire de référence induite (IBRi) avec une image binaire de référence (IBR).

8. Dispositif électronique de codage d'une signature numérique d'un réseau de neurones, ledit réseau de neurones étant enregistré au sein d'une structure de données comprenant des blocs de paramètres, le dispositif comprenant, pour un bloc de paramètres courant comprenant au moins M paramètres représentant des nombres réels, les paramètres étant choisis parmi le groupe consistant en : des poids de couches, des biais, des valeurs de tenseurs, des valeurs de normalisation et des valeurs de convolution :
- des moyens d'obtention d'une image binaire de signature (IBSig) à partir de la signature numérique comprenant un ensemble de bits extrait des paramètres du bloc de paramètres courant ;
- des moyens de combinaison de l'image binaire de signature (IBSig) avec une image binaire de référence (IBR) délivrant une délivrant une image binaire codée (IBC).

9. Dispositif électronique de décodage d'une signature numérique d'un réseau de neurones, ledit réseau de neurones étant enregistré au sein d'une structure de données comprenant des blocs de paramètres, le dispositif comprenant, pour un bloc de paramètres courant (BPcL) comprenant au moins M paramètres représentant des nombres réels, les paramètres étant choisis parmi le groupe consistant en : des poids de couches, des biais, des valeurs de tenseurs, des valeurs de normalisation et des valeurs de convolution :
- des moyens d'obtention (B10) d'une image binaire de signature (IBSigL) à partir d'un ensemble de bits des paramètres du bloc de paramètres courant ;
- des moyens de combinaison (B20), de l'image binaire de signature (IBSigL) avec une image binaire codée (IBC) associée au bloc de paramètres courant, délivrant une image binaire de référence induite (IBRi).

10. Programme d'ordinateur comportant des instructions logicielles qui, lorsqu'elles sont exécutées par un dispositif électronique programmable, mettent en oeuvre un procédé de codage de signature numérique conforme aux revendications 1 à 4 et/ou un procédé de décodage de signature numérique conforme aux revendications 5 à 7.
